# EUROPÄISCHE PATENTSCHRIFT

(11) **EP 3 078 478 B1**
(45) Veröffentlichungstag und Bekanntmachung des Hinweises auf die Patenterteilung: **28.08.2019**
(21) Anmeldenummer: 16152933.4
(22) Anmeldetag: 27.01.2016
(51) Int. Cl.: B29C 51/22

(54) **HEIZVORRICHTUNG ZUM ERWÄRMEN EINER FOLIE**
HEATING DEVICE FOR HEATING A FILM
DISPOSITIF DE CHAUFFAGE DESTINE AU RECHAUFFEMENT D'UNE FEUILLE

(30) Priorität: 09.04.2015 EP 15162889
(43) Veröffentlichungstag der Anmeldung: 12.10.2016
(73) Patentinhaber: KOCH Pac-Systeme GmbH, 72285 Pfalzgrafenweiler (DE)
(72) Erfinder: Rothfuß, Christian Bernhard, 72270 Baiersbronn (DE); Bitzer, Jürgen, 72160 Horb a. N. (DE)
(74) Vertreter: Wächter, Jochen

(56) Entgegenhaltungen:
- EP-A1- 2 390 084
- EP-A2- 0 435 234
- US-A- 3 386 503
- US-A1- 2012 131 730

## Beschreibung

Die vorliegende Erfindung betrifft eine Heizvorrichtung zum Erwärmen einer Folie.

Derartige Heizvorrichtungen werden standardmäßig in Thermoformmaschinen verwendet und dienen dem Aufheizen der Folie vor der Verformung. Ein spezieller Anwendungsbereich sind Thermoformmaschinen für die Herstellung von Blisterverpackungen in der pharmazeutischen Industrie, aber auch in anderen Branchen, etwa für die Verpackung von Kosmetik- oder Körperpflegeprodukten sowie von Lebensmitteln. Um einen hohen Wärmeübertrag zu erreichen, werden diese Heizplatten als Kontaktheizplatten ausgebildet. Eine derartige Heizvorrichtung besteht üblicherweise aus einer Trägerplatte und einer damit verbundenen Heizplatte. Auf der Heizplatte kann eine Wechselplatte angeordnet sein, die in Kontakt mit der Folie kommt. Zur Gewährleistung eines guten Wärmeübertrags sind Heizplatte und Wechselplatte flächig miteinander verbunden. Die Verbindung zwischen Heizplatte und Wechselplatte kann gemäß EP 2 390 084 A1 über in die Heizplatte eingefügte Magnete erfolgen.

Eine Heizvorrichtung, die ein Temperaturprofil in der Folienbahn erzeugt, ist in EP 0 435 234 A2 offenbart. Die Heizvorrichtung umfasst ein Paar an oberen und unteren Heizplatten, die in Richtung der Folienbahn und von der Folienbahn weg bewegbar sind. Die Heizplatten weisen Erhebungen und Senken auf. Die Erhebungen sind näher zu der Folienbahn hin ausgerichtet, d.h. der Kontakt mit der Folienbahn ist lediglich an den Erhebungen vorhanden und im Bereich der Erhebungen wirkt eine höhere Temperatur auf die Folienbahn als in den Bereichen, in denen die Senken ausgebildet sind. Hierdurch wird ein Temperaturprofil in der Folienbahn erzeugt. Im Bereich der Senken fällt die Temperatur allerdings unkontrolliert und rasch ab, was beim Recken der Folie während des Formprozesses zu ungünstiger Dickenverteilung in der Form führen.

Eine Heizvorrichtung nach dem Oberbegriff des Anspruchs 1 ist in EP2390084 A1 offenbart.

Es ist die Aufgabe der vorliegenden Erfindung, eine Heizvorrichtung zum Erwärmen einer Folie zu schaffen, die auf einfache Weise ein definiertes und kontrolliertes Temperaturprofil über die gesamte Folienbahn erzeugt.

Diese Aufgabe wird durch die Merkmale des Anspruchs 1 gelöst.

Erfindungsgemäß umfasst die Heizvorrichtung zum Erwärmen einer Folie eine Heizplatte und eine Wechselplatte, die mit der Heizplatte verbunden ist. Mindestens eine von Heizplatte und Wechselplatte weist eine oder vorzugsweise eine Vielzahl an Ausnehmungen auf. Weiterhin sind die Heizplatte und die Wechselplatte derart miteinander verbunden, dass die eine oder die Vielzahl an Ausnehmungen mit der anderen von Heizplatte und Wechselplatte überdeckt ist, so dass ein oder vorzugsweise eine Vielzahl an Hohlräumen zwischen der Heizplatte und der Wechselplatte ausgebildet ist. Die Hohlräume sind mit Luft befüllt.

Die Wechselplatte weist somit eine durchgehende Arbeitsfläche auf, die eben ist und während des Heizvorgangs mit der zu erwärmenden Folie in Kontakt ist, wobei aber trotzdem durch den oder die verdeckten Hohlräume ein definiertes Temperaturprofil in der Folienbahn erzeugt werden kann. Zudem besitzt Luft eine gute Eignung zur Wärmeisolierung.

Von besonderem Vorteil ist es, wenn die Heizplatte Aussparungen aufweist, in denen Dauermagnete aufgenommen sind, die die Wechselplatte magnetisch mit der Heizplatte verbinden. Auf diese Weise kann die Wechselplatte einfach von der Heizplatte getrennt und ausgetauscht werden. Gleichzeitig wird durch die magnetische Verbindung eine sichere Anhaftung der Wechselplatte an der Heizplatte während des Betriebs gewährleistet.

Eine besonders gute Anhaftung der Wechselplatte an der Heizplatte wird dadurch geschaffen, dass die Wechselplatte vorzugsweise auf der der Heizplatte zugewandten Seite mit einem magnetisch anziehbaren Material beschichtet ist.

Die Vielzahl an Ausnehmungen ist in einer ersten Gestaltung in der Heizplatte ausgebildet und ist von der Wechselplatte überdeckt. Dadurch sind die Ausnehmungen sehr nah an dem zu bearbeitenden Bereich der Folienbahn angeordnet, um das gewünschte Temperaturprofil in der Folienbahn zu erzeugen, wobei gleichzeitig eine glatte Arbeitsfläche der Wechselplatte zum Erwärmen der Folienbahn beibehalten werden kann.

Wenn alternativ die Vielzahl an Ausnehmungen in der Wechselplatte ausgebildet ist und von der Heizplatte überdeckt ist, ist aufgrund der Austauschbarkeit der Wechselplatte ein einfacherer Wechsel zu anderen Geometrien und Strukturen der Ausnehmungen für verschiedene Anwendungsbereiche möglich.

Vorteilhafterweise sind die Ausnehmungen in einem vorbestimmten Muster auf der Heizplatte oder der Wechselplatte verteilt. Durch das vorbestimmte Muster kann gezielt ein vorbestimmtes Temperaturprofil in der Folienbahn erzeugt werden.

Vorzugsweise sind die Ausnehmungen in einem regelmäßigen Muster auf der Heizplatte oder der Wechselplatte verteilt, wodurch ein Temperaturprofil mit homogenem Verlauf erreicht wird.

Für viele Anwendungen ist es dabei sinnvoll, wenn die Ausnehmung in Zeilen und Spalten auf der Heizplatte oder Wechselplatte angeordnet sind.

Um ein besonders differenziertes Temperaturprofil in der Folienbahn erzeugen zu können, können in den Ausnehmungen Erhebungen ausgebildet sein, die sich von einem Boden der Ausnehmung aus erstrecken. Insbesondere soll damit das Temperaturprofil auch im Bereich niedriger Temperatur homogen gestaltet werden.

Vorzugsweise weisen die Ausnehmungen eine Tiefe von zwischen 0,05 mm und 1,00 mm, bevorzugt zwischen 0,10 mm und 0,50 mm auf. Diese Tiefen haben sich als geeignet zur Einstellung eines Temperaturprofils für die meisten Anwendungen erwiesen.

Vorteilhafterweise ist auch eine Trägerplatte vorgesehen, die mit der Heizplatte verbunden ist. Die Heizplatte ist vorzugsweise zwischen Trägerplatte und Wechselplatte angeordnet.

Damit lediglich die Heizplatte und die Wechselplatte aufgeheizt werden, ist vorteilhafterweise zwischen der Trägerplatte und der Heizplatte ein Isolierelement angeordnet.

Eine Heizmatte ist vorzugsweise zwischen der Trägerplatte und der Heizplatte angeordnet, wodurch eine besonders gute Erwärmung der Heizplatte und somit der Wechselplatte erfolgen kann.

Eine Heizeinheit umfasst mindestens zwei Heizvorrichtungen, die gegenüberliegend angeordnet sind und von denen mindestens eine relativ zur anderen bewegbar ist, wobei mindestens eine Heizvorrichtung wie oben beschrieben ausgebildet ist.

Eine Thermoformmaschine zum Formen von Näpfen in eine Folie umfasst mindestens eine Heizvorrichtung zum Erwärmen einer Folie oder eine Heizeinheit wie oben beschrieben.

Weitere Eigenschaften und Vorteile der vorliegenden Erfindung ergeben sich aus der nachfolgenden Beschreibung unter Bezugnahme auf die Zeichnungen:
- Fig. 1: ist eine Frontansicht einer Ausführungsform einer Thermoformmaschine mit einer Heizeinheit mit mindestens einer erfindungsgemäßen Heizvorrichtung;
- Fig. 2: ist eine Perspektivansicht einer Heizeinheit mit zwei erfindungsgemäßen Heizvorrichtungen;
- Fig. 3: ist eine Explosionsansicht einer Ausführungsform der erfindungsgemäßen Heizvorrichtung;
- Fig. 4: ist eine Explosionsansicht einer weiteren Ausführungsform der erfindungsgemäßen Heizvorrichtung;
- Fig. 5: ist eine Explosionsansicht einer weiteren Ausführungsform der erfindungsgemäßen Heizvorrichtung;
- Fig. 6: ist eine Draufsicht auf eine Ausführungsform einer Heizplatte mit verschiedenen Ausnehmungsmustern; und
- Fig. 7: ist eine Draufsicht auf eine Ausführungsform einer Heizplatte mit weiteren verschiedenen Ausnehmungsmustern.

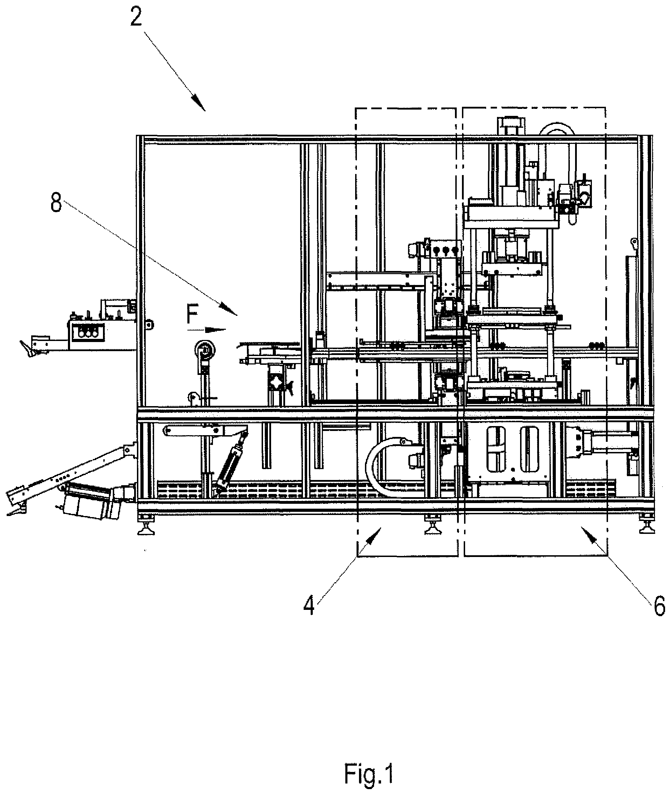

In Fig. 1 ist eine Thermoformmaschine 2 zum Formen von Näpfen in einer Folienbahn gezeigt. Die Thermoformmaschine 2 weist eine Ausführungsform einer erfindungsgemäßen Heizeinheit 4 und eine Formstation 6 auf. Die Thermoformmaschine 2 umfasst weiterhin eine Fördereinheit 8 zum Fördern einer Folie (nicht dargestellt). Im vorliegenden Ausführungsbeispiel weist die Thermoformmaschine 2 eine Förderrichtung F auf, die hier von links nach rechts verläuft, so dass die Heizeinheit 4 vor der Formstation 6 angeordnet ist. Die Folie wird zunächst von der Fördereinheit 8 in die Heizeinheit 4 befördert und wird dort auf eine bestimmte Temperatur erwärmt. Anschließend wird die erwärmte Folie in der Formstation 6 in die gewünschte Form geformt.

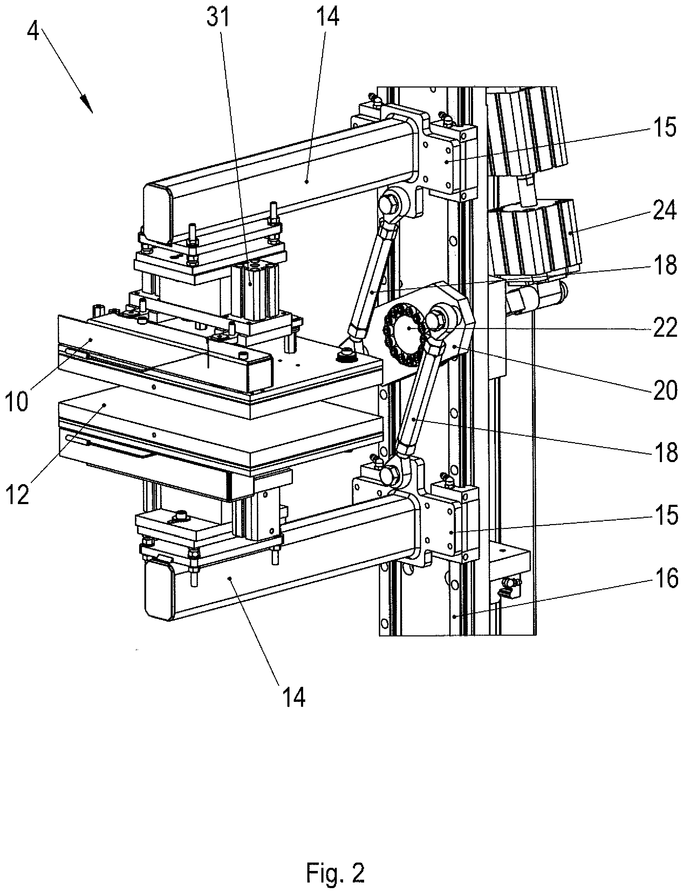

In Fig. 2 ist ein Ausschnitt der Heizeinheit 4 aus Fig. 1 vergrößert dargestellt. Die Heizeinheit 4 umfasst im vorliegenden Ausführungsbeispiel eine obere Heizvorrichtung 10 und eine untere Heizvorrichtung 12. Die obere und die untere Heizvorrichtung 10, 12 sind jeweils über ein Trägerelement 14 an einem verschiebbaren Schlitten 15 befestigt. Der Schlitten 15 wiederum ist an einer zur Förderrichtung F vertikal ausgerichteten Schiene 16 verschiebbar gelagert. Der Schlitten 15 der oberen Heizvorrichtung 10 und der Schlitten 15 der unteren Heizvorrichtung 12 sind jeweils über ein Verbindungselement 18 an gegenüberliegenden Seiten einer gemeinsamen Drehgelenksplatte 20 drehbar gelagert. Die Drehgelenksplatte 20 ist wiederum mit einem Drehgelenk 22 verbunden. Das Drehgelenk 22 ist von einer Antriebseinheit 24 angetrieben und bewegt die obere Heizvorrichtung 10 und die untere Heizvorrichtung 12 relativ zueinander, so dass ein Spalt, der zwischen der oberen Heizvorrichtung 10 und der unteren Heizvorrichtung 12 vorhanden ist und durch den die Folienbahn verläuft, entweder vergrößert oder bis zum Kontakt mit der Folie verkleinert wird.

Denkbar ist aber auch, dass die Heizeinheit 4 der Thermoformmaschine 2 nur eine erfindungsgemäße Heizvorrichtung 10, 12 aufweist und die der erfindungsgemäßen Heizvorrichtung 10, 12 gegenüberliegenden Heizvorrichtung eine herkömmliche Heizvorrichtung ist. Ebenso sind viele andere Gestaltungen des Bewegungsmechanismus der Heizeinheit 4 möglich.

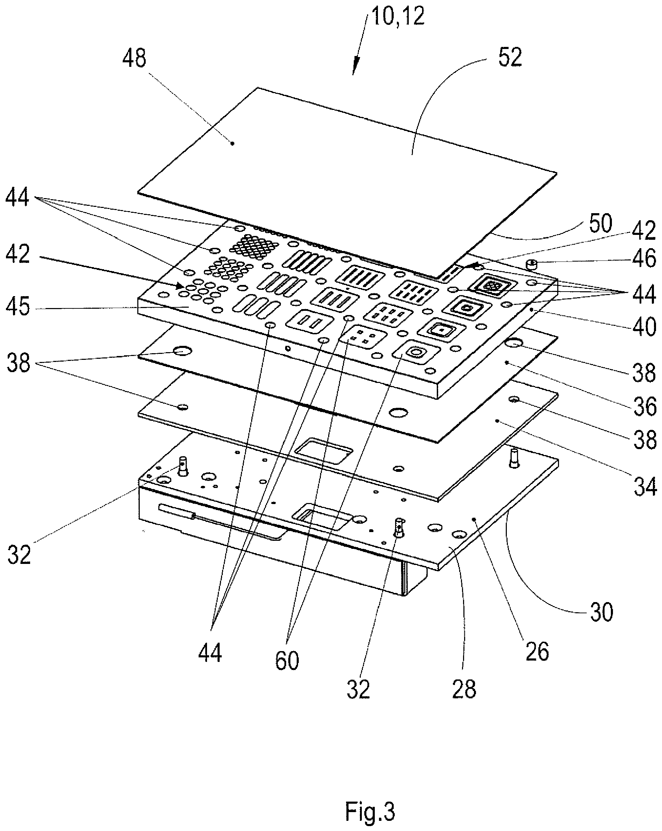

Fig. 3 ist eine Explosionsansicht einer Ausführungsform einer erfindungsgemäßen oberen oder unteren Heizvorrichtung 10, 12. Die Heizvorrichtung 10, 12 weist eine Trägerplatte 26 auf. Die Trägerplatte 26 umfasst eine Aufnahmefläche 28 und eine Trägerfläche 30. Das Trägerelement 14 ist mittels einer Trägerbefestigungseinheit 31 (siehe Fig. 2) an der Trägerfläche 30 befestigt. Von der Aufnahmefläche 28 ragt eine Vielzahl von Schrauben 32 ab. Vorzugsweise sind vier Schrauben 32 auf der Aufnahmefläche 28 jeweils nahe einem Eckbereich der Trägerplatte 26 ausgebildet. Andere Anordnungen sind selbstverständlich möglich.

Weiterhin umfasst die in Fig. 3 abgebildete erfindungsgemäße Heizvorrichtung 10, 12 ein Isolierelement 34 und eine Heizmatte 36. Das Isolierelement 34 ist als eine Isolierplatte ausgebildet und ist zum Isolieren der Trägerplatte 26 vorgesehen, damit das Material der Trägerplatte 26 bei den hohen Temperaturen, die beim Erwärmen der Folie auftreten können, nicht unnötig aufgeheizt wird und Verluste vermieden werden. Die Heizmatte 36 dient als Heizmittel, um die Heizplatte 40 aufzuheizen, die weiter unten beschrieben wird. Andere Heizmittel wie Heizpatronen sind ebenfalls denkbar. Das Isolierelement 34 und die Heizmatte 36 weisen jeweils Durchgangsöffnungen 38 auf, durch die die Schrauben 32 hindurchverlaufen, so dass das Isolierelement 34 und nachfolgend die Heizmatte 36 miteinander verbunden werden können.

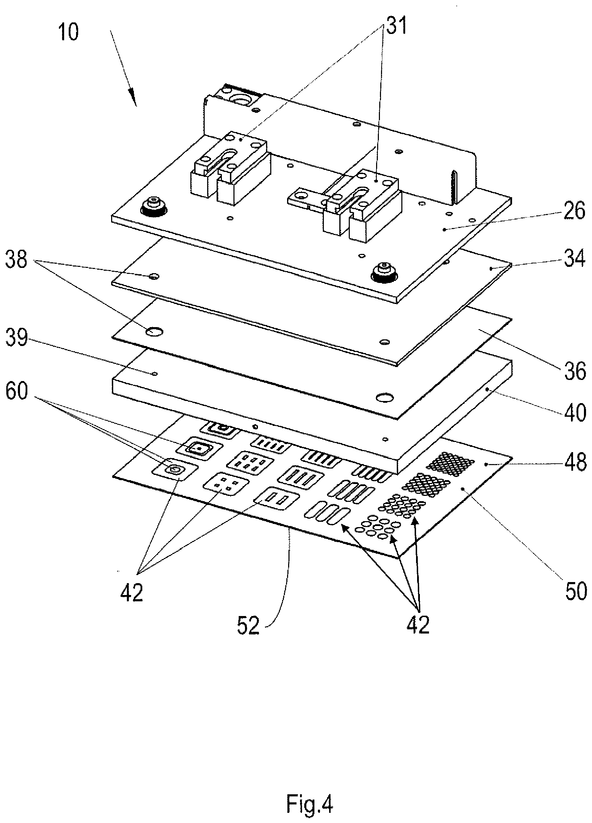

Vorzugsweise erstrecken sich die Schrauben 32 bis in eine Gewindeöffnung 39 (Fig. 4) der Heizplatte 40 hinein. Die Heizplatte 40 wird jedoch nicht von den Schrauben 32 durchdrungen. Das Isolierelement 34, die Heizmatte 36 und die Heizplatte 40 sind üblicherweise mit der Trägerplatte 26 verschraubt oder anderweitig fest verbunden.

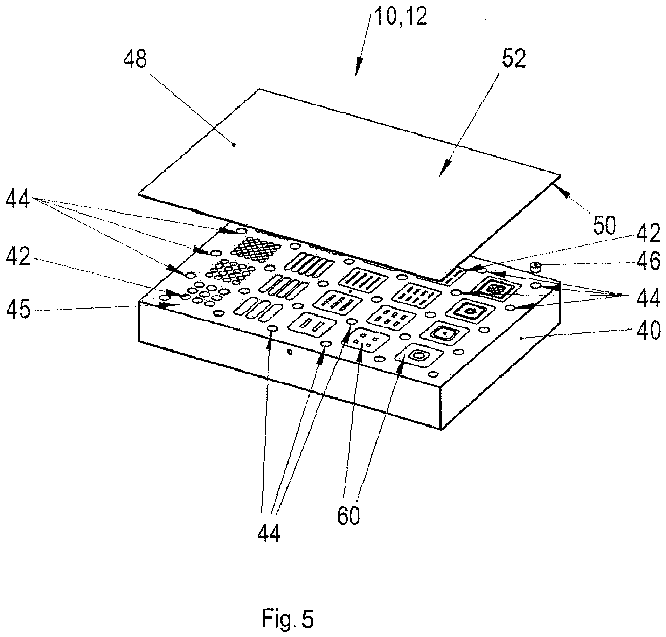

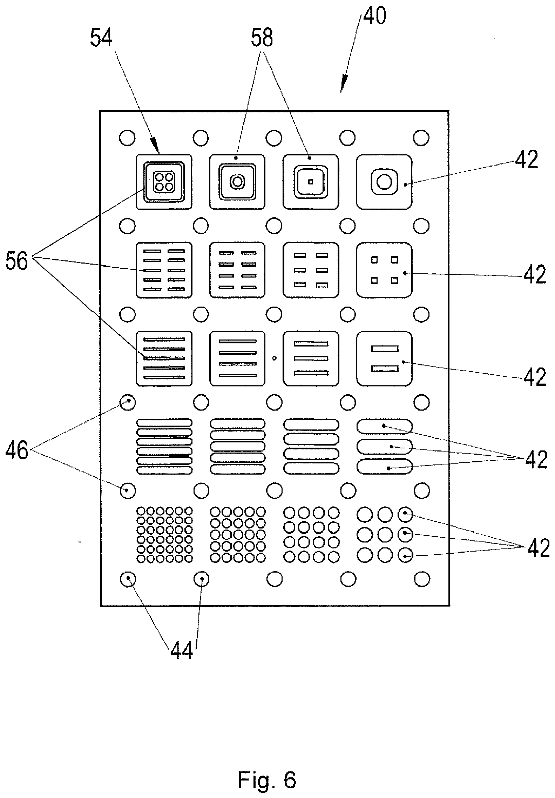

Die Heizplatte 40 weist im vorliegenden Ausführungsbeispiel eine Vielzahl von verschiedenen Mustern an Ausnehmungen 42 auf. In Fig. 5 und 6 wird näher auf die verschiedenen Ausnehmungen 42 eingegangen. Des Weiteren weist die Heizplatte 40 eine Vielzahl an Aussparungen 44 auf, die sich von einer Heizplattenoberfläche 45 der Heizplatte 40 aus in die Heizplatte 40 hinein erstrecken. In den Aussparungen 44 sind Permanent- bzw. Dauermagnete 46 eingesetzt. Die Höhe der Dauermagnete 46 entspricht vorzugsweise der Tiefe der Aussparungen 44. Die Aussparungen 44 sind zwischen den Randbereichen der Heizplatte 40 und den Ausnehmungen 42 angeordnet. Durch die Dauermagnete 46 ist eine Wechselplatte 48 magnetisch mit der Heizplatte 40 verbunden. Um die Anziehungskraft zwischen der Heizplatte 40 und der Wechselplatte 48 zu erhöhen, kann die Wechselplatte 48 auf der der Heizplatte 40 zugewandten Seite 50 zusätzlich magnetisch beschichtet sein.

Weiterhin weist die Wechselplatte 48 eine Arbeitsfläche 52 auf. Die Arbeitsfläche 52 ist auf der der Heizplatte 40 abgewandten Seite der Wechselplatte 48 angeordnet und ist der Folienbahn zugewandt. Die Arbeitsfläche 52 weist im Wesentlichen eine glatte Oberflächenstruktur auf. Die Arbeitsfläche 52 kann auch mit einer Antihaftbeschichtung ausgestattet sein.

In Fig. 3 und 4 ist die Trägerplatte 26, das Isolierelement 34, die Heizmatte 36, die Heizplatte 40 und die Wechselplatte 48 voneinander beabstandet dargestellt. In Wirklichkeit liegen diese einzelnen Elemente direkt aufeinander. Des Weiteren weisen die einzelnen Elemente 26, 34, 36, 40 und 48 vorzugsweise alle die gleiche Querschnittsform, d.h. die gleichen Abmessungen in Länge und Breite, auf. Im vorliegenden Ausführungsbeispiel haben alle plattenartigen Elemente 26, 34, 36, 40 und 48 einen rechteckigen Querschnitt ausgebildet. Vorstellbar ist aber auch, dass die plattenartigen Elemente 26, 34, 36, 40 und 48 je nach Anforderung andere Formen aufweisen können.

In Fig. 4 ist eine weitere Ausführungsform der erfindungsgemäßen Heizvorrichtung 10, 12 dargestellt. Der Aufbau der Heizvorrichtung 10, 12 ist dem Aufbau der Heizvorrichtung 10, 12 in Fig. 3 ähnlich. Er unterscheidet sich darin, dass die Ausnehmungen 42 in der Wechselplatte 48 statt in der Heizplatte 40 ausgebildet sind. Die Wechselplatte 48 in Fig. 4 weist wiederum die Arbeitsfläche 52 und eine der Heizplatte 40 zugewandte Seite 50 auf, wobei auf der der Heizplatte 40 zugewandten Seite 50 die Ausnehmungen 42 ausgebildet sind. Des Weiteren ist in Fig. 4 zumindest eine Teileinheit der Trägerbefestigungseinheit 31 dargestellt, die fest auf der Trägerfläche 30 mit der Trägerplatte 26 verbunden ist.

In Fig. 3 wird die Vielzahl an Ausnehmungen 42, die in der Heizplatte 40 ausgebildet sind, von der Wechselplatte 48 überdeckt und in Fig. 4 wird die Vielzahl an Ausnehmungen 42, die in der Wechselplatte 48 ausgebildet sind, von der Heizplatte 40 überdeckt. In beiden Fällen wird eine Vielzahl an Hohlräumen 60 zwischen der Heizplatte 40 und der Wechselplatte 48 gebildet. Die Vielzahl an Hohlräumen 60 ist vorzugsweise mit Luft gefüllt. Es ist aber auch denkbar, dass sowohl Heizplatte 40 als auch die Wechselplatte 48 gleichzeitig Ausnehmungen 42 aufweisen. Dabei können die Ausnehmungen 42 in der Heizplatte 40 und in der Wechselplatte 48 identisch sein, so dass beispielsweise die Ausnehmung 42 in der Heizplatte 40 von den Ausnehmungen 42 in der Wechselplatte 48 überdeckt werden. Die in Fig. 3 und 4 beispielhaft abgebildeten Ausnehmungen 42 in der Heizplatte 40 oder der Wechselplatte 48 sind in Fig. 5 noch einmal deutlicher dargestellt.

Die in Fig. 5 dargestellte Ausführungsform der Heizvorrichtung entspricht im Wesentlichen der ausführungsform aus Fig. 3, allerdings übernimmt hier die Heizplatte 40 gleichzeitig die Funktion einer Trägerplatte. Eine eigenständige Trägerplatte liegt somit nicht mehr vor.

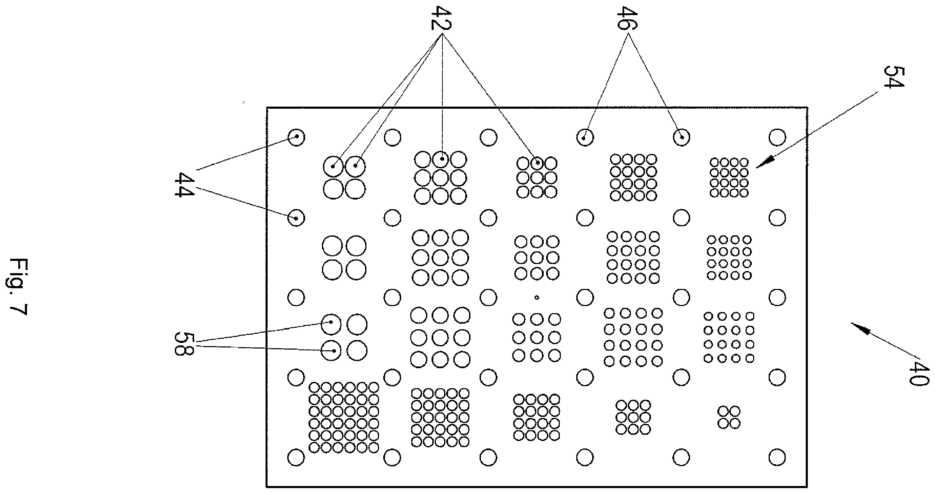

In den Fig. 6 und 7 ist jeweils eine Draufsicht auf mehrere verschiedene Muster der Ausnehmungen 42 beispielhaft in der Heizplatte 40 abgebildet. Es versteht sich jedoch von selbst, dass dieselben Muster, die hier auf der Heizplatte 40 abgebildet sind, auch auf der Wechselplatte 48 vorliegen können. Des Weiteren versteht sich von selbst, dass normalerweise alle Ausnehmungen 42 einer Heizplatte 40 bzw. einer Wechselplatte 48 dasselbe Muster aufweisen und dieses über die gesamte Fläche der jeweiligen Platte ausgebildet ist. Die Darstellung dient nur einer einfachen Übersicht über mögliche Muster und Ausgestaltungen einzelner Ausnehmungen.

Die Ausnehmungen 42 sind in Fig. 6 und Fig. 7 in einem vorbestimmten Muster auf der Heizplatte 40 oder der Wechselplatte 48 ausgebildet. Das vorbestimmte Muster kann eine beliebige Form aufweisen. Vorzugsweise sind die Ausnehmungen 42 in einem regelmäßigen Muster auf der Heizplatte 40 oder der Wechselplatte 48 verteilt. In den vorliegenden Ausführungsbeispielen sind die Ausnehmungen 42 in Zeilen und Spalten auf der Heizplatte 40 oder der Wechselplatte 48 verteilt. Zwischen den einzelnen Zeilen und Spalten weist die Heizplatte 40 in Fig. 6 und 7 die Aussparungen 44 auf, in die die Dauermagnete 46 eingesetzt werden, wie bereits oben beschrieben wurde.

Die Ausnehmungen 42 sind jeweils in der Heizplatte 40 oder Wechselplatte 48 als Senken ausgebildet. Dabei kann die Tiefe der Ausnehmungen 42 je nach Anforderungsbedingungen variieren.

Die Tiefe der Ausnehmungen 42 ist abhängig von dem gewünschten Temperaturgefälle bzw. Temperaturprofil. Im Bereich der Ausnehmungen 42 weist die Arbeitsfläche 52 der Wechselplatte 48 eine geringere Temperatur auf als in den ausnehmungslosen Bereichen. Im Bereich der Ausnehmungen 42 kann die Temperatur so bis etwa 60 % niedriger sein als in den ausnehmungslosen Bereichen.

Die Ausnehmungen 42 können eine Tiefe von zwischen 0,05 mm und 1,00 mm, bevorzugt zwischen 0,10 mm und 0,50 mm, aufweisen.

In den einzelnen Ausnehmungen 42 können eine einzelne oder mehrere Erhebungen 56 ausgebildet sein. Die Erhebungen 56 erstrecken sich von einem Boden 58 der jeweiligen Ausnehmung 42 aus. Die Höhe der Erhebungen 56 kann ebenfalls je nach Anforderungsprofil variieren. Die Erhebung 56 kann beispielsweise gleich der Tiefe der Ausnehmung 42 sein oder ein geringeres Maß aufweisen. Jedoch kann die Höhe der Erhebung 56 nicht größer als die Tiefe der Ausnehmung 42 sein.

Des Weiteren kann die Ausgestaltung der Ausnehmungen 42 unterschiedlich sein. Es sind alle möglichen Formen denkbar.

## Patentansprüche

1. Heizvorrichtung (10, 12) zum Erwärmen einer Folie, mit
einer Heizplatte (40), und
einer Wechselplatte (48), die mit der Heizplatte (40) verbunden ist,
wobei mindestens eine von Heizplatte (40) und Wechselplatte (48) eine Ausnehmung (42) oder eine Vielzahl an Ausnehmungen (42) aufweist, und
die Heizplatte (40) und die Wechselplatte (48) derart miteinander verbunden sind, dass die Ausnehmung (42) oder die Vielzahl an Ausnehmungen (42) mit der anderen von Heizplatte (40) und Wechselplatte (48) überdeckt ist, so dass ein Hohlraum (60) oder eine Vielzahl an Hohlräumen (60) zwischen der Heizplatte (40) und der Wechselplatte (48) ausgebildet ist,
**dadurch gekennzeichnet, dass** jeder Hohlraum (60) mit Luft gefüllt ist.

2. Heizvorrichtung (10, 12) nach Anspruch 1, **dadurch gekennzeichnet, dass** die Heizplatte (40) Aussparungen (44) aufweist, in denen Dauermagnete (46) aufgenommen sind, die die Wechselplatte (48) magnetisch mit der Heizplatte (40) verbinden.

3. Heizvorrichtung (10, 12) nach Anspruch 1 oder 2, **dadurch gekennzeichnet, dass** die Wechselplatte (48) auf der der Heizplatte (40) zugewandten Seite mit einem magnetisch anziehbaren Material beschichtet ist.

4. Heizvorrichtung (10, 12) nach einem der vorangehenden Ansprüche, **dadurch gekennzeichnet, dass** jede Ausnehmung (42) in der Heizplatte (40) ausgebildet ist und von der Wechselplatte (48) überdeckt ist.

5. Heizvorrichtung (10, 12) nach einem der Ansprüche 1 bis 4, **dadurch gekennzeichnet, dass** jede Ausnehmung (42) in der Wechselplatte (48) ausgebildet ist und von der Heizplatte (40) überdeckt ist.

6. Heizvorrichtung (10, 12) nach einem der vorangehenden Ansprüche, **dadurch gekennzeichnet, dass** die Ausnehmungen (42) in einem vorbestimmten Muster auf der Heizplatte (40) oder der Wechselplatte (48) verteilt sind.

7. Heizvorrichtung (10, 12) nach Anspruch 6, **dadurch gekennzeichnet, dass** die Ausnehmungen (42) in einem regelmäßigen Muster auf der Heizplatte (40) oder der Wechselplatte (48) verteilt sind.

8. Heizvorrichtung (10, 12) nach einem der vorangehenden Ansprüche, **dadurch gekennzeichnet, dass** die Ausnehmungen (42) in Zeilen und Spalten auf der Heizplatte oder der Wechselplatte (48) angeordnet sind.

9. Heizvorrichtung (10, 12) nach einem der vorangehenden Ansprüche, **dadurch gekennzeichnet, dass** in den Ausnehmungen (42) Erhebungen (56) ausgebildet sind, die sich von einem Boden (58) der Ausnehmungen (42) aus erstrecken.

10. Heizvorrichtung (10, 12) nach einem der vorangehenden Ansprüche, **dadurch gekennzeichnet, dass** die Ausnehmungen (42) eine Tiefe von zwischen 0,05 mm und 1,00 mm, bevorzugt zwischen 0,10 mm und 0,50 mm aufweisen.

11. Heizvorrichtung (10, 12) nach einem der vorangehenden Ansprüche, **dadurch gekennzeichnet, dass** sie außerdem eine Trägerplatte (26) aufweist, die mit der Heizplatte (40) verbunden ist, wobei die Heizplatte (40) zwischen der Trägerplatte (26) und der Wechselplatte (48) angeordnet ist.

12. Heizvorrichtung (10, 12) nach Anspruch 11, **dadurch gekennzeichnet, dass** zwischen der Trägerplatte (26) und der Heizplatte (40) ein Isolierelement (34) angeordnet ist.

13. Heizvorrichtung (10, 12) nach Anspruch 11 oder 12, **dadurch gekennzeichnet, dass** zwischen der Trägerplatte (26) und der Heizplatte (40) eine Heizmatte (36) angeordnet ist.

14. Heizeinheit (4) mit mindestens zwei Heizvorrichtungen (10, 12), die gegenüberliegend angeordnet sind und von denen mindestens eine relativ zur anderen bewegbar ist, wobei mindestens eine Heizvorrichtung (10, 12) nach einem der vorangehenden Ansprüche ausgebildet ist.

15. Thermoformmaschine (2) zum Formen von Näpfen in eine Folie zur Erzeugung einer Blisterbahn, mit mindestens einer Heizvorrichtung (10, 12) zum Erwärmen der Folie nach einem der Ansprüche 1 bis 13 oder einer Heizeinheit (4) nach Anspruch 14.

## Claims

1. Heating apparatus (10, 12) for heating a film, comprising
a heating plate (40) and
an exchange plate (48) which is connected to the heating plate (40),
wherein
at least one of the heating plate (40) and the exchange plate (48) has a recess (42) or a plurality of recesses (42), and
the heating plate (40) and the exchange plate (48) are connected to one another in such a way that the recess (42) or the plurality of recesses (42) is covered by the other one of the heating plate (40) and the exchange plate (48), so that a cavity (60) or a plurality of cavities (60) is formed between the heating plate (40) and the exchange plate (48), **characterized in that** each cavity (60) is filled with air.

2. Heating apparatus (10, 12) according to Claim 1, **characterized in that** the heating plate (40) has cutouts (44) in which permanent magnets (46) are accommodated, which permanent magnets magnetically connect the exchange plate (48) to the heating plate (40) .

3. Heating apparatus (10, 12) according to Claim 1 or 2, **characterized in that** the exchange plate (48) is coated with a magnetically attractable material on that side which faces the heating plate (40).

4. Heating apparatus (10, 12) according to one of the preceding claims, **characterized in that** each recess (42) is formed in the heating plate (40) and is covered by the exchange plate (48).

5. Heating apparatus (10, 12) according to one of Claims 1 to 4, **characterized in that** each recess (42) is formed in the exchange plate (48) and is covered by the heating plate (40).

6. Heating apparatus (10, 12) according to one of the preceding claims, **characterized in that** the recesses (42) are distributed over the heating plate (40) or the exchange plate (48) in a predetermined pattern.

7. Heating apparatus (10, 12) according to Claim 6, **characterized in that** the recesses (42) are distributed over the heating plate (40) or the exchange plate (48) in a regular pattern.

8. Heating apparatus (10, 12) according to one of the preceding claims, **characterized in that** the recesses (42) are arranged on the heating plate or the exchange plate (48) in rows and columns.

9. Heating apparatus (10, 12) according to one of the preceding claims, **characterized in that** projections (56) are formed in the recesses (42), which projections extend from a base (58) of the recesses (42).

10. Heating apparatus (10, 12) according to one of the preceding claims, **characterized in that** the recesses (42) have a depth of between 0.05 mm and 1.00 mm, preferably of between 0.10 mm and 0.50 mm.

11. Heating apparatus (10, 12) according to one of the preceding claims, **characterized in that** it also has a carrier plate (26) which is connected to the heating plate (40), wherein the heating plate (40) is arranged between the carrier plate (26) and the exchange plate (48) .

12. Heating apparatus (10, 12) according to Claim 11, **characterized in that** an insulating element (34) is arranged between the carrier plate (26) and the heating plate (40).

13. Heating apparatus (10, 12) according to Claim 11 or 12, **characterized in that** a heating mat (36) is arranged between the carrier plate (26) and the heating plate (40).

14. Heating unit (4) comprising at least two heating apparatuses (10, 12) which are arranged opposite one another and at least one of which can be moved relative to the other, wherein at least one heating apparatus (10, 12) is designed according to one of the preceding claims.

15. Thermoforming machine (2) for forming cavities in a film for producing a blister web, comprising at least one heating apparatus (10, 12) for heating the film according to one of Claims 1 to 13 or one heating unit (4) according to Claim 14.

## Revendications

1. Dispositif de chauffage (10, 12) destiné à chauffer une feuille, pourvu
d'une plaque chauffante (40), et
d'une plaque interchangeable (48), qui est reliée à la plaque chauffante (40),
dans lequel
au moins une parmi la plaque chauffante (40) et la plaque interchangeable (48) présente un creux (42) ou une pluralité de creux (42), et
la plaque chauffante (40) et la plaque interchangeable (48) sont reliées l'une à l'autre de telle sorte que le creux (42) ou la pluralité de creux (42) sont recouverts par l'autre parmi la plaque chauffante (40) et la plaque interchangeable (48), de sorte qu'une cavité (60) ou une pluralité de cavités (60) sont formées entre la plaque chauffante (40) et la plaque interchangeable (48),
**caractérisé en ce que** chaque cavité (60) est remplie d'air.

2. Dispositif de chauffage (10, 12) selon la revendication 1, **caractérisé en ce que** la plaque chauffante (40) présente des évidements (44), dans lesquels des aimants permanents (46) sont logés, qui relient la plaque interchangeable (48) de façon magnétique à la plaque chauffante (40).

3. Dispositif de chauffage (10, 12) selon la revendication 1 ou 2, **caractérisé en ce que** la plaque interchangeable (48) est revêtue sur la face tournée vers la plaque chauffante (40) d'un matériau pouvant subir une attraction magnétique.

4. Dispositif de chauffage (10, 12) selon l'une quelconque des revendications précédentes, **caractérisé en ce que** chaque creux (42) est formé dans la plaque chauffante (40) et est recouvert par la plaque interchangeable (48).

5. Dispositif de chauffage (10, 12) selon l'une quelconque des revendications 1 à 4, **caractérisé en ce que** chaque creux (42) est formé dans la plaque interchangeable (48) et est recouvert par la plaque chauffante (40).

6. Dispositif de chauffage (10, 12) selon l'une quelconque des revendications précédentes, **caractérisé en ce que** les creux (42) sont répartis suivant un motif prédéfini sur la plaque chauffante (40) ou la plaque interchangeable (48).

7. Dispositif de chauffage (10, 12) selon la revendication 6, **caractérisé en ce que** les creux (42) sont répartis suivant un motif régulier sur la plaque chauffante (40) ou la plaque interchangeable (48).

8. Dispositif de chauffage (10, 12) selon l'une quelconque des revendications précédentes, **caractérisé en ce que** les creux (42) sont agencés en lignes et en colonnes sur la plaque chauffante ou la plaque interchangeable (48).

9. Dispositif de chauffage (10, 12) selon l'une quelconque des revendications précédentes, **caractérisé en ce que** des élévations (56), qui s'étendent à partir d'un fond (58) des creux (42), sont formées dans les creux (42).

10. Dispositif de chauffage (10, 12) selon l'une quelconque des revendications précédentes, **caractérisé en ce que** les creux (42) présentent une profondeur comprise entre 0,05 mm et 1,00 mm, de préférence entre 0,10 mm et 0,50 mm.

11. Dispositif de chauffage (10, 12) selon l'une quelconque des revendications précédentes, **caractérisé en ce qu'**il présente en outre une plaque de support (26), qui est reliée à la plaque chauffante (40), dans lequel la plaque chauffante (40) est agencée entre la plaque de support (26) et la plaque interchangeable (48) .

12. Dispositif de chauffage (10, 12) selon la revendication 11, **caractérisé en ce qu'**un élément isolant (34) est agencé entre la plaque de support (26) et la plaque chauffante (40).

13. Dispositif de chauffage (10, 12) selon la revendication 11 ou 12, **caractérisé en ce qu'**un mat chauffant (36) est agencé entre la plaque de support (26) et la plaque chauffante (40)

14. Unité de chauffage (4) pourvue d'au moins deux dispositifs de chauffage (10, 12), qui sont agencés à l'opposé l'un de l'autre et parmi lesquels au moins l'un peut être déplacé par rapport à l'autre, dans laquelle au moins un dispositif de chauffage (10, 12) selon l'une quelconque des revendications précédentes est réalisé.

15. Machine de thermoformage (2) destinée au formage d'alvéoles dans une feuille pour la production d'une bande alvéolée, pourvue d'au moins un dispositif de chauffage (10, 12) destiné à chauffer la feuille selon l'une quelconque des revendications 1 à 13 ou d'une unité de chauffage (4) selon la revendication 14.
